# FASCICULE DE BREVET EUROPEEN

(11) **EP 3 336 447 B1**
(45) Date de publication et mention de la délivrance du brevet: **22.01.2020**
(21) Numéro de dépôt: 18154764.7
(22) Date de dépôt: 10.04.2012
(51) Int. Cl.: F24S 20/70, H01L 31/042, F24S 80/00, H02S 20/00, H02S 20/24, H02S 20/10, F24S 25/60, F24S 25/11, F24S 25/65, B29C 49/04

(54) **DISPOSITIF SUPPORT DE PANNEAU**
HALTERUNGSVORRICHTUNG FÜR PANEEL
PANEL-SUPPORTING DEVICE

(30) Priorité: 15.04.2011 FR 1101189
(43) Date de publication de la demande: 20.06.2018
(62) Demande divisionnaire de: 12714668.6
(73) Titulaire: Ciel et Terre International, 59262 Sainghin en Melantois (FR)
(72) Inventeur: VELOSO, Manuel, 59510 HEM (FR); GAVEAU, Alexis, 59443 VILLENEUVE D'ASCQ (FR)
(74) Mandataire: Bureau Duthoit Legros Associés

(56) Documents cités:
- EP-A1- 1 833 098
- EP-A1- 2 299 499
- WO-A2-2007/062278
- DE-A1-102009 019 548
- DE-U1-202008 014 174

## Description

L'invention concerne une installation photovoltaïque flottante comprenant des panneaux photovoltaïques et un système support de panneaux photovoltaïques résultant de l'assemblage de dispositifs supports de panneaux photovoltaïques et d'éléments de raccordement..

Le domaine de l'invention est celui des installations photovoltaïques, et plus particulièrement des installations photovoltaïques flottantes.

Dans le domaine des installations photovoltaïques flottantes, il est connu des dispositifs flottants supports de panneaux photovoltaïques, comprenant une structure support, sous forme d'un châssis métallique, soutenant un ou plusieurs panneaux photovoltaïques et des moyens de flottaison, solidarisés en partie inférieure de la structure support, sous forme de flotteurs plastiques.

Ces dispositifs flottants, de structure complexe, sont destinés à être fabriqués en atelier, puis à être acheminés par camion jusqu'au site de mise en œuvre.

La mise en œuvre d'une installation photovoltaïque flottante, selon l'art antérieur, nécessite une logistique importante, non seulement pour la réalisation des dispositifs flottants, en atelier, mais également pour leur acheminement jusqu'au site de mise en œuvre, puis leur assemblage.

On connait par ailleurs de l'état de la technique, par exemple des documents WO2010/097406 A2, EP 1833 098 A1, DE102009019548A1, DE10 2009 019548, DE 10 2008 055627 ou encore DE 20 2008 014174 des dispositifs supports de panneaux solaires trouvant une application particulière pour la pose de panneaux photovoltaïques sur des toits à surfaces horizontales. Chacun de ces dispositifs est constitué par un élément synthétique sous forme d'une coque dont la base est destinée à être fixée sur une surface horizontale, la coque présentant une surface supérieure inclinée sur laquelle est destinée à être fixé le panneau.

De tels dispositifs, classiquement obtenus par thermoformage, sont sous forme d'une coque ouverte et ne conviennent pas pour une application flottante. En particulier, ces dispositifs ne constituent en aucun cas des flotteurs susceptibles de constituer partie d'une installation solaire flottante, aptes à résister à des conditions de houle, ou encore à des intempéries.

On connait encore du document WO2007062278 A2 un dispositif et un système pour la génération d'électricité à partir d'un dispositif photovoltaïque flottant. Le dispositif comprend une ou plusieurs cellules photovoltaïques qui sont fixées à un panneau souple, lui-même attaché de manière amovible sur un élément flottant, gonflable. Les dispositifs peuvent être couplés mécaniquement entre eux afin de former un réseau de plusieurs dispositifs photovoltaïques flottants. Le système comprend un ou plusieurs dispositifs flottants qui sont ancrés sur une zone de l'étendue d'eau et connectés électriquement à des onduleurs.

On connait encore du document EP 2299499 A1 un agencement photovoltaïque flottant comprenant plusieurs flotteurs individuels chacun sous forme d'un corps en mousse recouvert de résine. Chaque flotteur individuel supporte un module photovoltaïque. L'agencement flottant est équipé d'un ancrage s'adaptant automatiquement au niveau d'eau d'un bassin d'une centrale hydro-électrique, l'agencement étant raccordé à l'infrastructure de la centrale pour alimenter le courant d'origine photovoltaïque dans le réseau électrique de la centra

Le but de la présente invention est de proposer une installation dont les dispositifs supports de panneaux photovoltaïques sont de structure simplifiée par rapport à l'état de la technique, qui peut être fabriqué aisément et à faible coût de revient.

Un autre but de la présente invention est de proposer une installation avec de tels dispositifs qui permettent de fixer simplement et à moindre coût un panneau cadré ou non.

Un autre but de la présente invention est de proposer une telle installation dont les dispositifs permettent de fixer un grand nombre de panneaux photovoltaïques du marché, et même dans le cas de différences de dimensionnement entre lesdits panneaux.

Un autre but de la présente invention est de proposer une telle installation dont les dispositifs, flottants, facilitent le refroidissement du panneau, autorisant l'aération de l'étendue d'eau sur lequel le dispositif est posé.

Un autre but de la présente invention est de proposer une telle installation dont le système support de panneaux photovoltaïques est de mise en œuvre aisée.

Un autre but de la présente invention est de proposer une installation dont le système support de panneaux photovoltaïques, est apte à résister à des conditions de houle, limitant les projections sur les cellules photovoltaïques desdits panneaux,
Un autre but de la présente invention est de proposer une telle installation avec un tel système support de panneaux, dont les éléments constituant le système - en particulier dispositifs et éléments de raccordement - peuvent être facilement transportés et stockés.

D'autres buts et avantages de la présente invention apparaîtront au cours de la description qui n'est donnée qu'à titre indicatif et qui n'a pas pour but de la limiter.

L'invention est relative à une installation photovoltaïque flottante comprenant des panneaux photovoltaïques et un système support de panneaux photovoltaïques résultant de l'assemblage de dispositifs supports de panneaux photovoltaïques et d'éléments de raccordement, les dispositifs supports et les éléments de raccordement étant des éléments modulaires, ledit système présentant des moyens de fixation pour l'assemblage entre eux desdits éléments de raccordement et desdits dispositifs supports de panneaux photovoltaïques et dans lequel :
- chaque dispositif support de panneau photovoltaïque est constitué essentiellement d'une enveloppe plastique, étanche, ladite enveloppe plastique constituant une paroi inférieure, une paroi supérieure , et quatre parois latérales, ladite enveloppe plastique étant apte à renfermer un volume d'air lui permettant de constituer un flotteur, le dispositif présentant des moyens de maintien d'un panneau photovoltaïque sur ladite paroi supérieure de ladite enveloppe plastique.
- chaque élément de raccordement est constitué essentiellement par une enveloppe plastique, étanche, ladite enveloppe plastique dudit élément de raccordement constituant une paroi inférieure, une paroi supérieure, et quatre parois latérales, ladite enveloppe plastique présentant un volume intérieur permettant d'assurer la flottaison dudit élément de raccordement,
   et dans lequel lesdits panneaux photovoltaïques sont maintenus sur les parois supérieures des enveloppes plastiques des dispositifs supports de panneau photovoltaïque,
   ledit système présentant au moins deux rangées de dispositifs supports de panneaux photovoltaïques, lesdites deux rangées (de dispositifs étant maintenues au moyen d'une rangée d'éléments de raccordement, intercalaire, apte à constituer un couloir de maintenance, ladite rangée intercalaire d'éléments de raccordement étant une rangée intercalaire configurée pour écarter entre elles les deux rangées de dispositifs supports panneaux photovoltaïques évitant qu'un panneau photovoltaïque appartenant à une rangée de dispositifs supports ne fasse de l'ombre sur un panneau photovoltaïque d'une rangée successive de dispositifs support
   et dans lequel deux dispositifs supports consécutifs appartenant à une même rangée de dispositifs supports sont écartés distants mutuellement au moyen d'un élément de raccordement, voire de deux éléments de raccordement en parallèle, entretoisant les deux dispositifs, et de sorte que l'écartement entre les deux dispositifs consécutifs appartenant à une même rangée permet de prévoir les panneaux photovoltaïques débordant des enveloppes plastiques des dispositifs supports, ladite rangée étant constituée desdits dispositifs supports, disposés côte à côte par l'intermédiaire de leurs parois latérales , lesdits panneaux photovoltaïques étant prévus débordant des enveloppes plastiques des dispositifs supports .

L'enveloppe plastique du dispositif support de panneau peut être fabriquée par les techniques de roto-moulage ou encore d'extrusion soufflage.

Selon un mode de réalisation avantageux non revendiqué, lesdits moyens de maintien comprennent deux profilés de fixation, élastomères, fixés à ladite enveloppe plastique, lesdits deux profilés de fixation s'étendant parallèlement entre eux, chacun des profilés de fixation présentant une fente longitudinale destinée pour le pincement du cadre d'un panneau photovoltaïque cadré, ou encore, destinée pour le pincement d'un panneau photovoltaïque non cadré, lesdites fentes longitudinales des deux profilés de fixation s'étendant suivant un même plan parallèle au plan du panneau photovoltaïque, lesdits deux profilés de fixation étant écartés mutuellement de telle façon à permettre la fixation d'un panneau photovoltaïque cadré par pincement de deux bords opposés du cadre, ou encore la fixation d'un panneau photovoltaïque, non cadré, par pincement de deux bords du panneau photovoltaïque.

Une telle fixation par des profilés élastomères permet le maintien du panneau, cadré ou non cadré, par deux de ses bords opposés simplement grâce aux frottements entre la matière élastomère des profilés et celle du cadre ou du panneau.

Cette fixation par profilés est avantageuse à plusieurs égards. Tout d'abord, cette solution est de coût de revient très faible, les profilés pouvant être obtenus par extrusion. Par ailleurs, cette solution est de pose aisée, ne nécessitant aucun outillage pour la fixation du panneau photovoltaïque aux profilés, celui-ci étant simplement pincé dans lesdites fentes longitudinales.

Par ailleurs, en prévoyant des fentes longitudinales de profondeurs surabondantes, il est possible de tenir compte de la dilatation du panneau ou de l'enveloppe de dispositif évitant ainsi que le panneau ou son cadre ne vienne en butée avec le fond des deux fentes longitudinales, et sans modifier l'écartement entre les deux profilés de fixation élastomère sur l'enveloppe plastique.

En outre et suivant l'autre direction du panneau, parallèle aux profilés, ledit panneau peut être prévu débordant des profilés de fixation, voire même de l'enveloppe. La dimension du panneau dans cette direction ne représente plus une contrainte de montage.

Avantageusement, selon un mode de réalisation non revendiqué, chaque profilé de fixation élastomère peut comprendre une rainure de forme complémentaire à une nervure de fixation, notamment de section en T, de ladite enveloppe plastique du dispositif, ledit profilé de fixation étant solidarisé à ladite enveloppe plastique en enfilant la nervure de fixation dans ladite rainure complémentaire du profilé de fixation élastomère.

Cette nervure de fixation de l'enveloppe est de préférence d'un seul tenant avec ladite enveloppe étanche du dispositif et peut être obtenu lors du moulage de ladite enveloppe plastique, notamment par les techniques de roto moulage ou encore d'extrusion soufflage. Aussi, la fixation de chaque profilé de fixation élastomère à l'enveloppe plastique du dispositif peut être également réalisée, simplement et sans outillage, en enfilant la nervure de fixation dans la rainure complémentaire du profilé, le maintien du profilé de fixation à l'enveloppe étant simplement obtenu grâce aux frottements entre la matière élastomère du profilé et la matière plastique de la nervure de fixation.

Selon un autre mode de réalisation illustré, non revendiqué, lesdits moyens de maintien comprennent, d'une part, des moyens glissières, en saillie sur ladite surface supérieure, aptes à coopérer en coulissement avec deux bords parallèles opposés dudit panneau photovoltaïque, et d'autre part, des moyens de butée de telle façon que le panneau photovoltaïque peut être maintenu sur la surface supérieure de ladite enveloppe plastique, en glissant ledit panneau photovoltaïque entre lesdits moyens glissières jusqu'à ce que ledit panneau photovoltaïque vienne en contact avec lesdits moyens de butée.

Une fois inséré dans lesdits moyens de maintien, le panneau photovoltaïque est sensiblement parallèle à la paroi supérieure de ladite enveloppe, bloqué dans la direction de coulissement par les moyens de butée. Un élément de verrouillage peut être prévu pour bloquer le coulissement dans l'autre sens.

Le blocage du panneau dans la direction perpendiculaire au plan du panneau est obtenu par lesdits moyens glissières et la paroi supérieure de l'enveloppe, prenant en sandwich le panneau sur son épaisseur.

Avantageusement, selon un mode de réalisation non revendiqué, lesdits moyens glissières et lesdits moyens de butée sont constitués par des éléments plastiques d'un seul tenant avec ladite enveloppe plastique dudit dispositif et peuvent être ainsi fabriqués aisément lors d'un moulage dudit élément plastique, tel que par exemple par les techniques de moulage par injection, rotomoulage ou extrusion soufflage.

Selon un mode de réalisation, ladite enveloppe plastique peut présenter un évidement destiné pour l'aération dudit panneau photovoltaïque, ledit évidement traversant ladite enveloppe plastique depuis ladite surface supérieure jusqu'à ladite paroi inférieure.

Cet évidement permet lorsque le dispositif support est utilisé comme élément d'une installation flottante, de faciliter le refroidissement du panneau photovoltaïque en facilitant les échanges thermiques entre l'eau et le panneau. Par ailleurs, cet évidement permet de faciliter l'oxygénation des surfaces d'eau recouvertes par le dispositif.

Alternativement ou additionnellement, ladite enveloppe plastique peut présenter au moins un canal, s'étendant en profondeur sur la surface supérieure, destiné pour l'aération dudit panneau photovoltaïque, ledit canal s'étendant d'une paroi latérale de ladite enveloppe plastique jusqu'à la paroi latérale opposée de ladite enveloppe plastique. Ce canal a pour fonction de faciliter le refroidissement du panneau photovoltaïque, ou encore permet par ailleurs de faire courir des câbles sous le panneau photovoltaïque.

Selon un mode de réalisation non revendiqué, ladite paroi inférieure et la paroi supérieure de l'enveloppe sont non parallèles entre elles, inclinées mutuellement d'un angle a. Cet angle α peut être compris entre 10° et 30° voire entre 10 et 14° et a pour fonction d'incliner le panneau photovoltaïque par rapport à l'horizontale dudit même angle α lorsque le dispositif repose sur une surface horizontale par l'intermédiaire de ladite paroi inférieure.

Dans le cas desdits moyens de maintien comprenant lesdits moyens de butée et lesdits moyens glissières, ladite paroi supérieure de l'enveloppe plastique présente, lorsque le dispositif repose sur une surface horizontale par l'intermédiaire de ladite paroi inférieure, d'une part, deux arrêtes, parallèles entre elles, inclinées chacune dudit angle α par rapport à l'horizontale, au niveau desquelles sont prévus les moyens glissières, et d'autre part, deux arrêtes parallèles entre elles, chacune parallèle à l'horizontale, dont l'une est à un niveau supérieur autorisant l'introduction du panneau photovoltaïque, et l'autre est à un niveau inférieur, présentant lesdits moyens de butée.

Dans le cas desdits moyens de maintien comprenant les deux profilés de fixation élastomère destinés à pincer respectivement deux bords opposés du panneau photovoltaïque, cadré ou non cadré, ces deux profilés peuvent s'étendre respectivement le long des arrêtes inférieure et supérieure de la paroi supérieure de l'enveloppe plastique du dispositif.

Selon un mode de réalisation, ladite enveloppe plastique dudit dispositif peut présenter une ouverture fermée par un bouchon, permettant de remplir partiellement le volume intérieur de l'enveloppe plastique. Le remplissage du volume intérieur étanche de l'enveloppe permet notamment, lorsque ladite enveloppe plastique est utilisée comme flotteur de changer les conditions de flottabilité de ladite enveloppe, ou encore lorsque le dispositif est utilisé sur une surface non liquide, de lester le dispositif.

Selon un mode de réalisation, ladite enveloppe plastique dudit dispositif support de panneau peut présenter des oreilles de fixation au niveau des quatre coins de ladite enveloppe plastique. Ces oreilles sont, de préférence, d'un seul tenant avec l'enveloppe plastique, obtenu lors du moulage de ladite enveloppe plastique (i.e roto moulage ou encore extrusion soufflage).
Ces oreilles sont de préférence destinées à coopérer avec d'autres oreilles d'éléments voisins, les oreilles étant mises en regard et verrouillées entre elles au moyen de goupilles.

Selon un mode de réalisation non revendiqué, au moins deux des parois latérales de l'enveloppe plastique sont de formes concaves, la concavité des parois latérales ayant pour fonction d'atténuer la houle, limitant ainsi les projections d'eau sur les cellules photovoltaïques du panneau.

Le système support de panneaux photovoltaïques résulte de l'assemblage de dispositifs support de panneaux photovoltaïques conformes à l'invention et d'éléments de raccordement apte à maintenir deux dispositifs support de panneau.

Chaque élément de raccordement est constitué essentiellement par ladite enveloppe plastique, étanche, ladite enveloppe plastique dudit élément de raccordement constituant une paroi inférieure, une paroi supérieure, et quatre parois latérales, ladite enveloppe plastique présentant un volume intérieur permettant d'assurer la flottaison dudit élément de raccordement, ledit système présentant lesdits moyens de fixation pour l'assemblage entre eux desdits éléments de raccordement et desdits dispositifs supports de panneaux photovoltaïques conformes à l'invention.

Selon un mode de réalisation, les moyens de fixation comprennent des oreilles de fixation de l'enveloppe plastique des dispositifs, ainsi que des oreilles de fixation de l'enveloppe plastique des éléments de raccordement, ainsi que des goupilles, chaque goupille étant destinée à traverser simultanément deux, voire trois ou quatre oreilles mises en regard afin d'assurer le verrouillage de l'assemblage.

Selon un autre mode de réalisation non revendiqué, lesdits moyens de fixation peuvent être constitués par des moyens de clippage mutuellement engageant entre chaque dispositif support de panneau photovoltaïque conforme à l'invention et chaque élément de raccordement.

Les moyens de clippage peuvent avantageusement être constitués par des premiers éléments plastiques d'un seul tenant avec ladite enveloppe plastique dudit dispositif support de panneau conforme à l'invention et des seconds éléments plastiques d'un seul tenant avec ladite enveloppe plastique dudit élément de raccordement.

La solidarisation d'un dispositif support de panneau photovoltaïque avec un élément de raccordement est alors obtenue en emboîtant à force lesdits premiers éléments plastiques avec lesdits seconds éléments plastiques.

Ledit système présente au moins deux rangées de dispositifs supports de panneaux, lesdites deux rangées de dispositifs étant maintenues au moyen d'une rangée d'éléments de raccord, apte notamment à constituer un couloir de maintenance.

Selon l'invention, deux dispositifs supports consécutifs appartenant à une même rangée sont écartés distants mutuellement au moyen d'un élément de raccordement, voire deux éléments de raccordement en parallèle, entretoisant les deux dispositifs. L'écartement entre deux dispositifs consécutifs permet, lorsque les panneaux photovoltaïques sont prévus débordant des enveloppes plastiques d'éviter les collisions entre panneaux.

Selon un mode de réalisation, un élément de raccordement sur deux appartenant à la rangée intercalaire assure l'entretoisement desdits deux dispositifs supports consécutifs appartenant à la rangée.

Selon un mode de réalisation l'enveloppe plastique de chacun desdits éléments de raccordement présente une ouverture fermée par un bouchon. Cette ouverture permet de changer les conditions de flottabilité dudit élément de raccordement par remplissage.

L'invention sera mieux comprise à la lecture de la description suivante accompagnée des dessins en annexe parmi lesquels :
- La figure 1 est une vue en perspective d'un dispositif support de panneau photovoltaïque d'une installation conforme à l'invention ;
- La figure 1a est une vue de côté du dispositif tel qu'illustré à la figure 1 ;
- La figure 2 est une vue de dessous du dispositif tel qu'illustré à la figure 1 ;
- La figure 3 est une vue d'un élément de raccordement destiné à coopérer avec ledit dispositif tel qu'illustré à la figure 1 ;
- La figure 4 est une vue du système support de panneaux photovoltaïques résultant de l'assemblage de dispositifs tels qu'illustrés à la figure 1 et d'éléments de raccordement tels qu'illustrés à la figure 3 (panneaux photovoltaïques non illustrés), selon un mode de réalisation non revendiqué;
- La figure 5 est une vue du système tel qu'illustré à la figure 4 (panneaux photovoltaïques illustrés), selon un mode de réalisation non revendiqué;
- La figure 6 est une vue d'un système support de panneaux photovoltaïques conforme à l'invention (panneaux retirés);
- La figure 7 est une vue du système tel qu'illustré à la figure 6, les panneaux photovoltaïques installés ;
- La figure 8 est une vue en perspective d'un dispositif support de panneau du système tel qu'illustré à la figure 6 ;
- La figure 9 est une vue de côté du dispositif tel qu'illustré à la figure 8 ;
- La figure 10 est une vue de dessous du dispositif tel qu'illustré à la figure 8 ;
- La figure 11 est une vue de détail du dispositif tel qu'illustré à la figure 8 ;
- La figure 12 est une vue d'une fixation élastomère (profilé) desdits moyens de maintien ;
- La figure 13 illustre, selon une vue de détail, le montage de la fixation élastomère sur l'enveloppe plastique du dispositif et sa coopération avec le cadre d'un panneau photovoltaïque cadré ;
- La figure 14 est une vue de coupe illustrant l'emboitement de du profilé de fixation élastomère sur une rainure en T de l'enveloppe plastique du dispositif ;
- La figure 15 est une vue de la fixation d'un panneau photovoltaïque cadré, par deux des bords opposés et parallèles du cadre du panneau, reçus respectivement dans les fentes de deux dites fixations élastomères ;
- La figure 16 est une vue de la fixation d'un panneau photovoltaïque non cadré, par deux des bords opposés dudit panneau reçus respectivement dans les fentes de deux dites fixations élastomères ;
- La figure 17 et la figure 18 sont respectivement des vues en perspective et de côté d'un élément de raccordement du système tel qu'illustré à la figure 6 ;
- La figure 19 est une vue d'un bloc, particulièrement destiné au transport, sensiblement parallélépipédique, résultant de l'empilement d'une part, de deux enveloppes plastiques de deux dispositifs conformes à l'invention, et d'autre part deux enveloppes plastiques de deux éléments de raccordement

Aussi l'invention concerne un dispositif 1 support de panneau photovoltaïque constitué essentiellement d'une enveloppe plastique 2, étanche, ladite enveloppe plastique 2 constituant une paroi inférieure 3, une paroi supérieure 4, et quatre parois latérales 5, 6, 7, 8, le dispositif présentant des moyens de maintien d'un panneau photovoltaïque sur ladite surface supérieure 4 de ladite enveloppe plastique.

Lesdits moyens de maintien permettent le positionnement stable du panneau photovoltaïque en appui sur la paroi supérieure 4 de ladite enveloppe plastique 2, parallèlement au plan de ladite paroi supérieure 4. La surface ou le cadre du panneau peut être directement en appui sur la paroi supérieure ou indirectement par l'intermédiaire des moyens de maintien.

L'enveloppe plastique 2, étanche est apte à renfermer un volume d'air lui permettant de constituer un flotteur. Eventuellement, cette enveloppe peut présenter une ouverture 200 fermée par un bouchon, notamment vissé. Ce bouchon permet éventuellement de remplir partiellement le volume intérieur de ladite enveloppe plastique 2.

Cette disposition permettra, lorsque ladite enveloppe plastique 2 est utilisée comme flotteur de changer les conditions de flottabilité, voire de diminuer la sensibilité du dispositif aux vents. Lorsque le dispositif est destiné à être utilisé sur le sol ou sur une surface dure, l'ouverture permet le remplissage de l'enveloppe, par exemple avec du sable, afin de lester le dispositif.

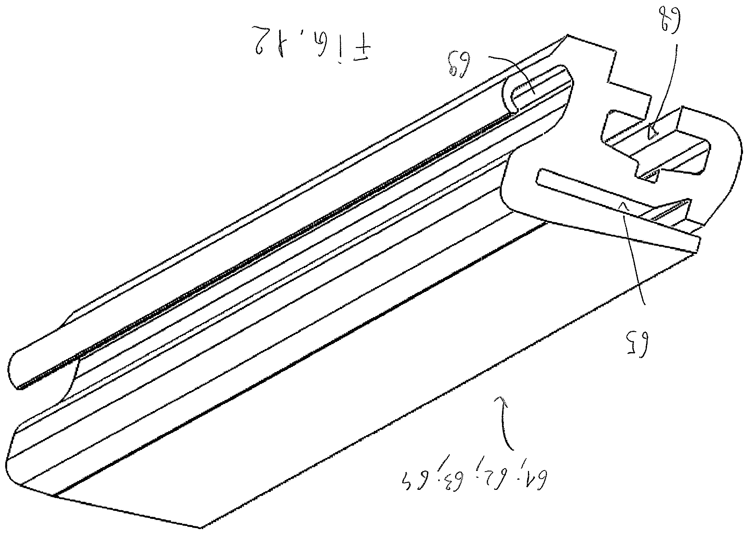

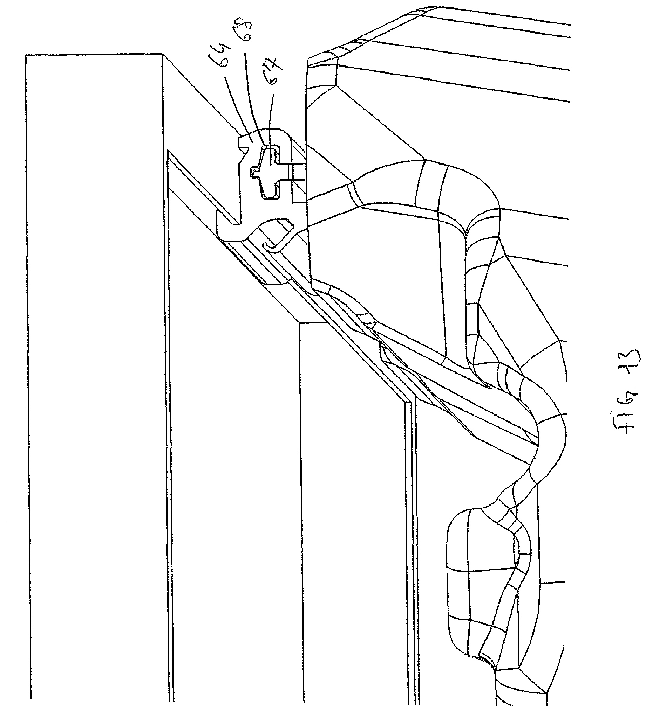

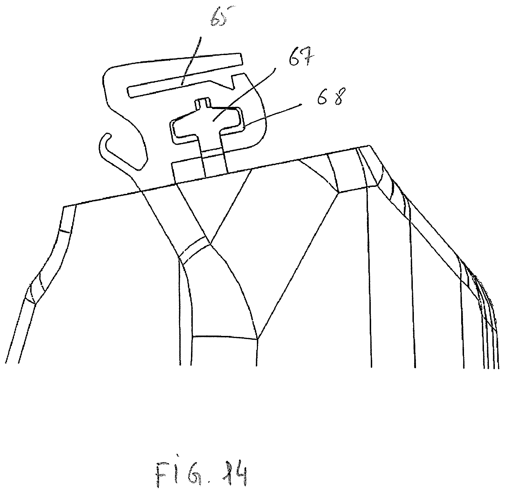

Selon un mode de réalisation, lesdits moyens de maintien sont constitués par des éléments de fixation, distincts de l'enveloppe plastique 2 du dispositif 1. Par exemple, selon un exemple de réalisation illustré en particulier des figures 12 à 16, lesdits moyens de maintien comprennent deux profilés de fixation 61, 62 ; 63 ; 64, élastomères, fixés à ladite enveloppe plastique 2, lesdits deux profilés de fixation 61, 62 ; 63 ; 64 s'étendant parallèlement entre eux.

Chacun des profilés de fixation présente une fente longitudinale 65 destinée pour le pincement élastique du cadre C d'un panneau photovoltaïque cadré, ou encore, destinée pour le pincement élastique d'un panneau photovoltaïque non cadré.

Avantageusement, lesdites fentes longitudinales 65 des deux profilés de fixation 61, 62 ou 63, 64 peuvent s'étendre notamment suivant un même plan parallèle au plan du panneau photovoltaïque, lesdits deux profilés de fixation 61, 62 ; 63 ; 64 étant écartés mutuellement de telle façon à permettre la fixation d'un panneau photovoltaïque.

Avantageusement, les fentes longitudinales 65 assurent ainsi le blocage du panneau photovoltaïque P uniquement grâce audit pincement élastique (du panneau photovoltaïque ou de son cadre) et aux frottements entre, d'une part, la matière élastomère desdits profilés de fixation 61, 62 ; 63 ; 64 et, d'autre part, le panneau photovoltaïque P non cadré, ou le cadre C du panneau photovoltaïque P cadré.

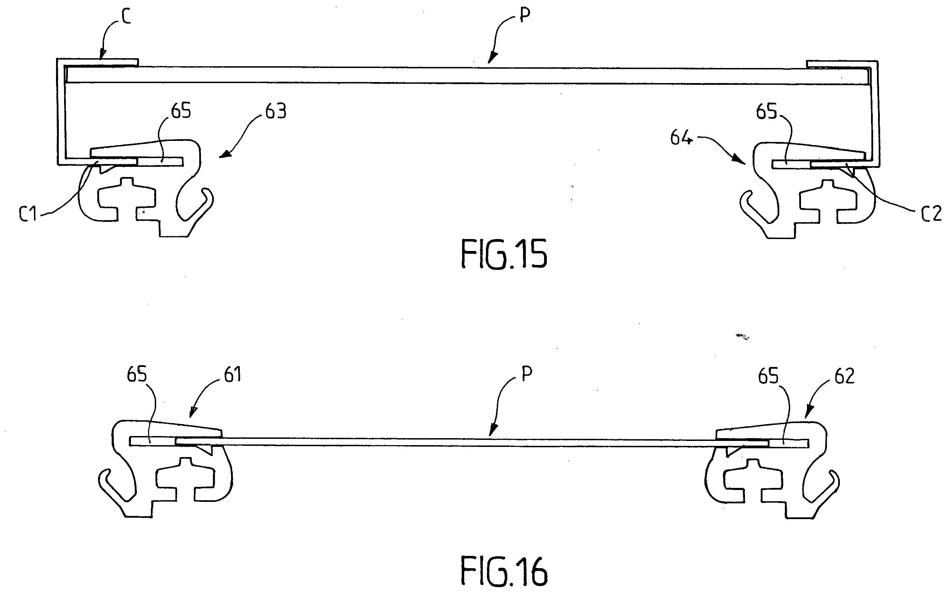

Par exemple, et selon le mode de réalisation de la figure 15, les deux profilés de fixation 63, 64 permettent le maintien d'un panneau cadré par pincement élastique de deux bords C1, C2 opposés du cadre. Les fentes longitudinales 65 débouchent alors vers l'extérieur pour pincer respectivement deux ailes du cadre, coplanaires. On notera de ce mode de réalisation que les profilés élastomères 63, 64 sont recouverts par le panneau P, et ainsi protégés des rayonnements UV.

Selon un autre mode de réalisation illustré à la figure 16, les deux profilés de fixation 61, 62 permettent le maintien d'un panneau non cadré par pincement élastique de deux bords du panneau photovoltaïque. Les fentes longitudinales 65 débouchent vers l'intérieur permettant le maintien d'un panneau photovoltaïque, non cadré.

Les deux profilés de fixation 61, 62 ou 63, 64 permettent de maintenir le panneau photovoltaïque P, cadré ou non cadré, par deux de ses bords seulement, le panneau P pouvant éventuellement dépasser, notamment des profilés, de part et d'autre de ladite enveloppe plastique 2, suivant une direction parallèle auxdits profilé 61, 62 ; 63 ; 64, notamment en porte-à-faux de ladite enveloppe plastique 2.

Avantageusement, la profondeur des fentes longitudinales 65 peut être surabondante, suivant une direction perpendiculaire au profilé et parallèle au plan du panneau, permettant de tenir compte des phénomènes de dilatation du panneau et/ou de l'enveloppe du dispositif, évitant ainsi que le panneau ou son cadre ne vienne en butée contre les fonds des deux profilés de fixation.

Avantageusement, selon un mode de réalisation illustré, chaque profilé de fixation élastomère 61, 62 ; 63 ; 64 peut comprendre une rainure longitudinale 68 de forme complémentaire à une nervure de fixation 66 ; 67 de ladite enveloppe plastique 2 du dispositif 1. Le profilé de fixation est alors solidarisé à ladite enveloppe plastique 2 en enfilant la nervure de fixation dans ladite rainure complémentaire 68 du profilé de fixation élastomère.

La nervure de fixation 66 ;67 peut présenter une section en T, en forme de trou de serrure (disque associé à un trapèze) ou toute autre forme interdisant le retrait par arrachement du profilé de fixation élastomère à la dite nervure de fixation.

Cette nervure de fixation 66, 67 de de l'enveloppe plastique 2 est de préférence d'un seul tenant avec ladite enveloppe plastique 2 du dispositif 1 et peut être obtenu lors du moulage de ladite enveloppe plastique 2, notamment par les techniques de roto moulage ou encore d'extrusion soufflage.

Aussi, la fixation de chaque profilé de fixation élastomère à l'enveloppe plastique du dispositif peut être également réalisée, simplement et sans outillage, en enfilant la nervure de fixation 66 ;67 dans la rainure longitudinale 68, de section complémentaire. Le maintien du profilé de fixation à l'enveloppe suivant le sens de la nervure est simplement obtenu grâce aux frottements entre la matière élastomère du profilé et la matière plastique de la nervure de fixation.

Eventuellement, le profilé de fixation élastomère 61, 62 ou 63, 64 peut comprendre, en outre, une gorge longitudinale 69 à l'intérieur de laquelle sont destinés à courir des câbles électriques.

Selon un autre mode de réalisation, lesdits moyens de maintien sont constitués par des éléments plastiques d'un seul tenant avec ladite enveloppe plastique.

Par exemple, lesdits moyens de maintien comprennent, d'une part, des moyens glissières 10, 11, 12, 13, en saillie sur ladite surface supérieure 4, aptes à coopérer en coulissement avec deux bords parallèles opposés dudit panneau photovoltaïque P, et d'autre part, des moyens de butée 140, 150.

De cette façon, le panneau photovoltaïque P peut être maintenu sur la surface supérieure 4 de ladite enveloppe plastique 2, en glissant ledit panneau photovoltaïque P entre lesdits moyens glissières 10, 11, 12, 13, dans une direction parallèle au plan de ladite paroi supérieure, jusqu'à ce que ledit panneau photovoltaïque P vienne en contact avec lesdits moyens de butée 140, 150.

Une fois inséré dans lesdits moyens de maintien, le panneau photovoltaïque est sensiblement parallèle à la paroi supérieure de ladite enveloppe, bloqué dans la direction de coulissement, dans un premier sens, par les moyens de butée. Un élément de verrouillage (non illustré) peut être prévu pour bloquer le coulissement dans un deuxième sens, opposé audit premier sens. Par exemple l'élément de verrouillage peut être un élément vissé dans un écrou surmoulé interne à la paroi de ladite enveloppe plastique 2. Une fois vissé, l'élément constitue une butée pour le panneau photovoltaïque P dans ledit deuxième sens.

Le blocage du panneau dans la direction perpendiculaire au plan du panneau est obtenu par lesdits moyens glissières et la paroi supérieure de l'enveloppe.

Selon un mode de réalisation illustré, lesdits moyens glissières 10, 11, 12, 13 et lesdits moyens de butée 140, 150 sont constitués par des éléments plastiques d'un seul tenant avec ladite enveloppe plastique 2 dudit dispositif 1.

Par exemple, lesdits moyens glissières sont prévus au niveau de deux arrêtes A1, A3 de ladite paroi supérieure 4, parallèles entre elles. Lesdits moyens glissières sont constitués par des éléments 10, 11, 12, 13 notamment au nombre de quatre. Chaque élément 10, 11, 12, 13 s'étend en saillie de la paroi supérieure 4 et forme une rainure destinée à recevoir le chant du panneau photovoltaïque P. Sur les figures, les éléments sont au nombre de quatre, en vis-à-vis, deux par deux.

Lesdits moyens de butée sont constitués sur une autre arête A4 de la paroi supérieure 4 de ladite enveloppe plastique 2. Ledit élément de verrouillage, le cas échéant, est situé sur la dernière arête, repérée A3.

Selon un mode de réalisation illustré, ladite enveloppe plastique 2 présente :
- un évidement 14 destiné pour l'aération dudit panneau photovoltaïque, ledit évidement 14 traversant ladite enveloppe plastique 2 depuis ladite paroi supérieure 4 jusqu'à ladite paroi inférieure 3 et/ou
- au moins un canal 15, 16, s'étendant en profondeur sur la paroi supérieure 4, destiné pour l'aération dudit panneau photovoltaïque, ledit au moins un canal 15, 16 s'étendant d'une paroi latérale de ladite enveloppe plastique 2 jusqu'à la paroi latérale opposée de ladite enveloppe plastique.

Par exemple, selon l'exemple des figures, ladite enveloppe plastique 2 présente ledit évidement 14, qui s'étend sur 20% à 50% de la surface supérieure de ladite enveloppe et deux canaux 15, 16, perpendiculaires entre eux, en profondeur sur la paroi supérieure 4 de ladite enveloppe plastique 2.

L'un 15 des canaux s'étend de la paroi latérale 6 jusqu'à ladite paroi latérale 8, opposée, l'autre 16, éventuel, des canaux s'étendant depuis l'autre paroi latérale 5 jusqu'à ladite paroi latérale 7 opposée. L'un 16 des canaux présente en outre en profondeur, une rainure pour le passage de câbles électriques.

Selon un mode de réalisation, ladite paroi inférieure 3 et la paroi supérieure 4 de l'enveloppe plastique 2 sont non parallèles entre elles, inclinées mutuellement d'un angle a. Cet angle α peut être compris entre 10° et 30° et par exemple entre 10° et 14° (i.e 12°). Cet angle α a pour fonction d'incliner le panneau photovoltaïque P par rapport à l'horizontale dudit même angle α lorsque le dispositif repose sur une surface horizontale par l'intermédiaire de ladite paroi inférieure 3. Un tel angle α compris entre 10° et 14° représente un compromis entre l'auto-nettoyage du panneau P, par le ruissellement des eaux de pluie et la prise au vent qui est minimisée.

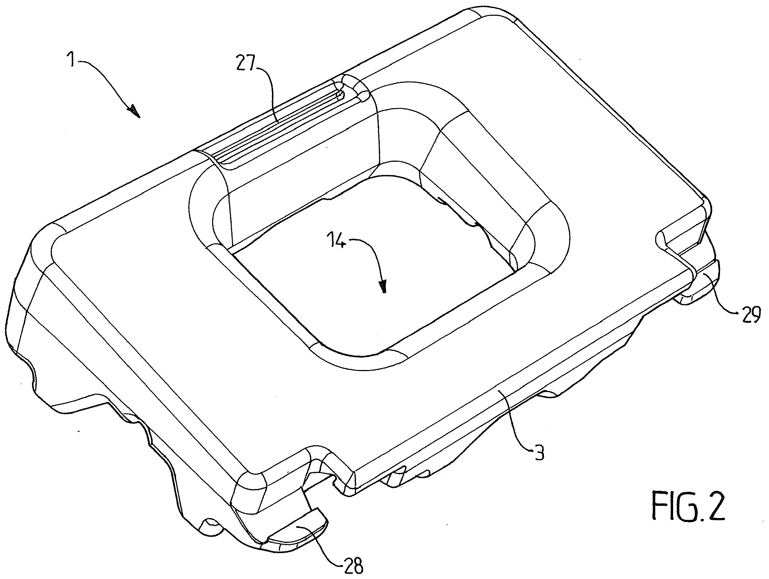

Par exemple, selon le mode de réalisation de la figure 2 ou, lorsque le dispositif 1 repose sur une surface horizontale par l'intermédiaire de ladite paroi inférieure 3, la paroi supérieure 4 de l'enveloppe plastique 2 présente d'une part, deux arêtes A1, A2, parallèles entre elles inclinées chacune dudit angle α par rapport à l'horizontale, au niveau desquelles sont prévus les moyens glissières 10, 11, 12, 13, et d'autre part, deux arêtes A3, A4 parallèles entre elles, chacune parallèle à l'horizontale, dont l'une A3 est à un niveau supérieur autorisant l'introduction du panneau photovoltaïque P, et l'autre A4 est à un niveau inférieur, présentant lesdits moyens de butée 14, 15. Selon ce mode de réalisation, la pente naturelle du dispositif contraint le panneau P en direction des moyens de butée140, 150, sous l'effet de la gravité.

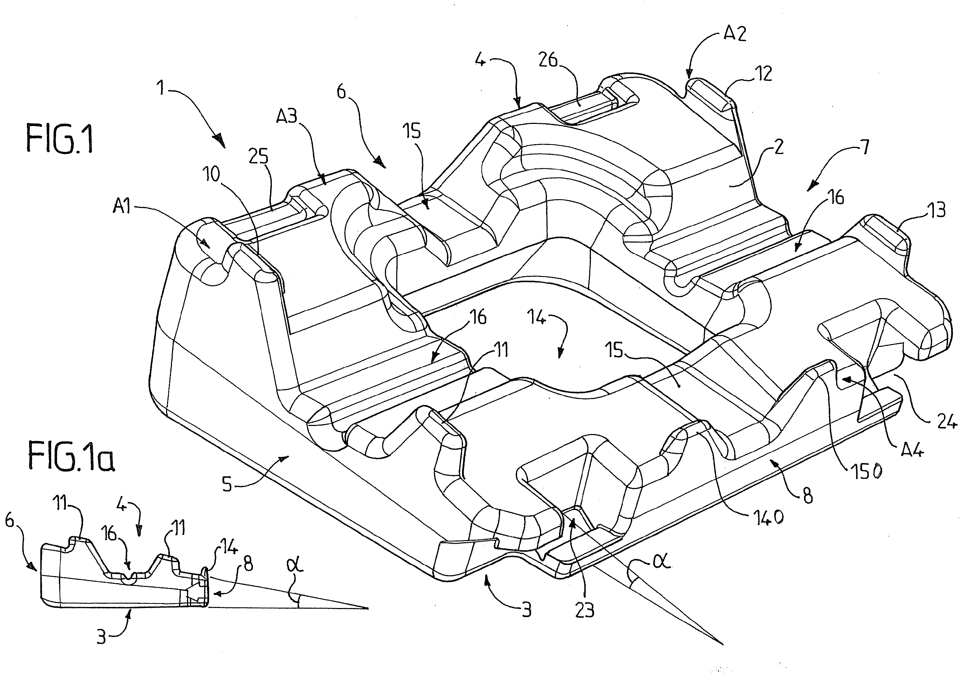

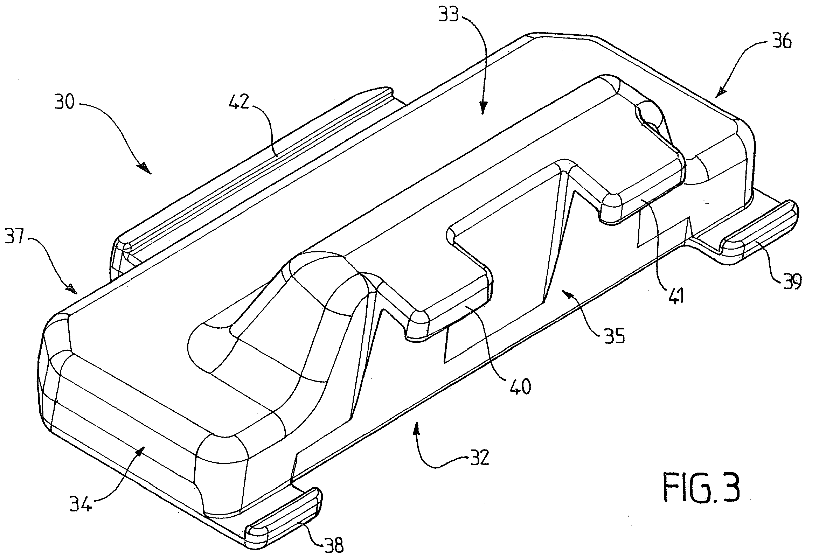

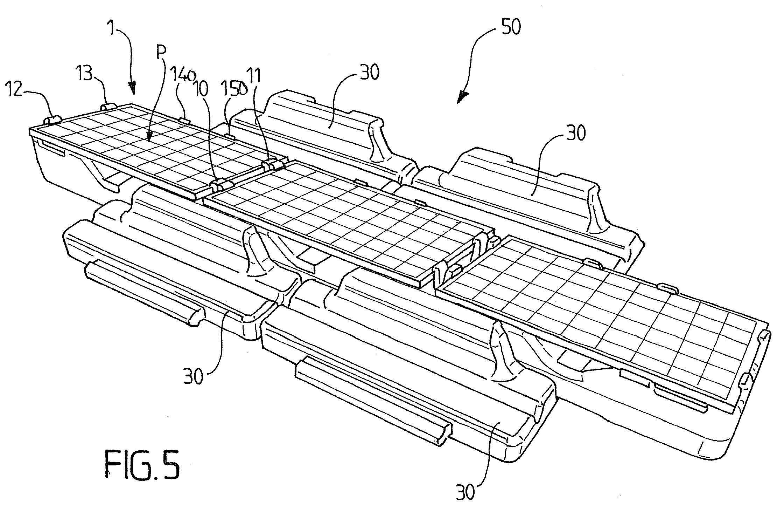

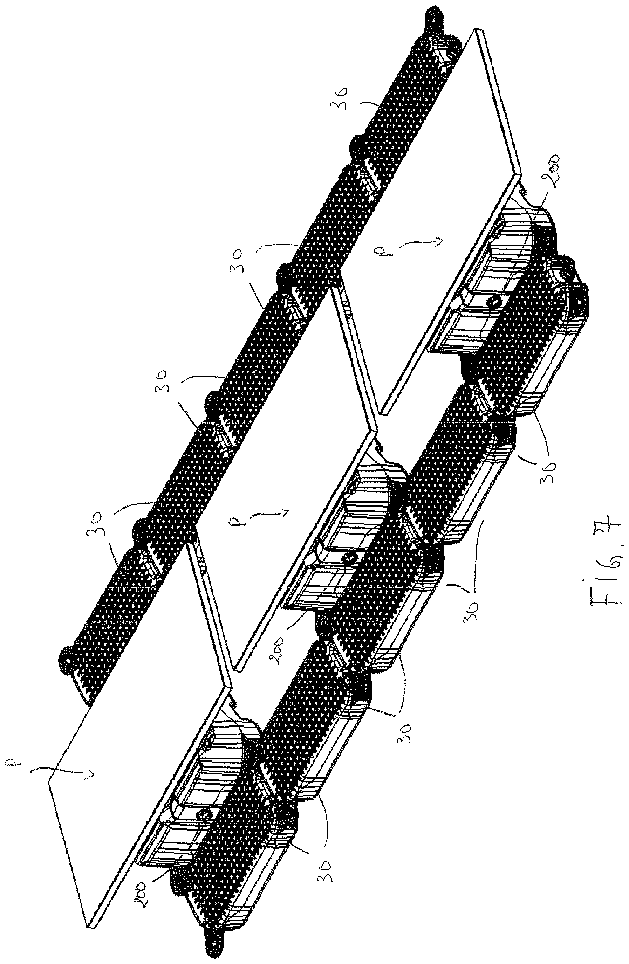

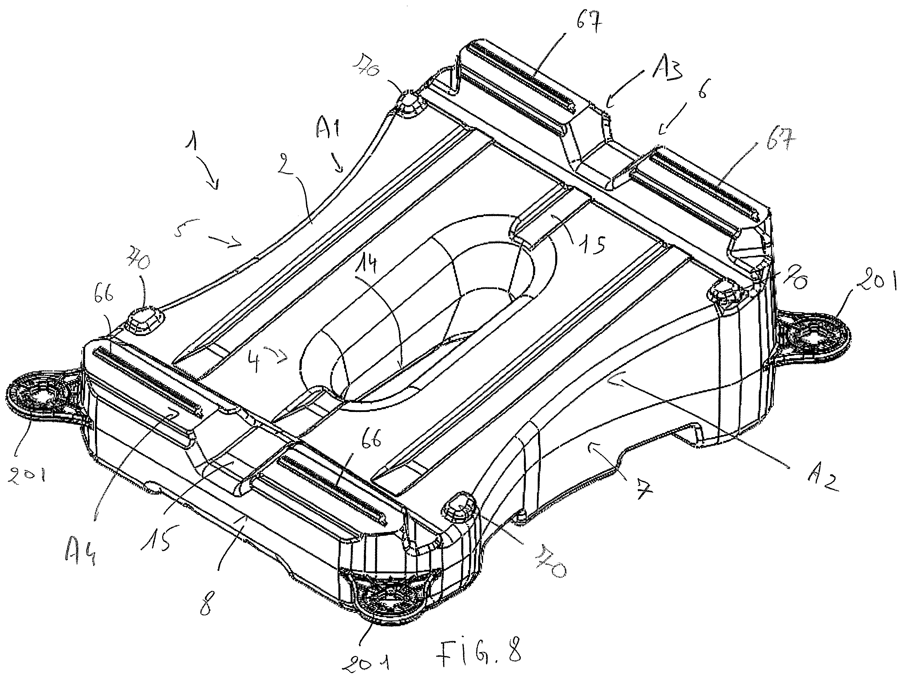

Selon un autre exemple illustré à la figure 8, lorsque le dispositif 1 repose sur une surface horizontale par l'intermédiaire de ladite paroi inférieure 3, la paroi supérieure 4 de l'enveloppe plastique 2 présente d'une part, deux arêtes A1, A2, parallèles entre elles inclinées chacune dudit angle α par rapport à l'horizontale, et d'autre part, deux arêtes A3, A4 parallèles entre elles, chacune parallèle à l'horizontale, dont l'une A3 est à un niveau supérieur le long duquel est prévu la nervure en T 67, et l'autre A4 est à un niveau inférieur, présentant l'autre nervure en T 66.Tel qu'illustré aux figures 1 à 5, le dispositif 1 support de panneau présente un encombrement sensiblement égal à l'encombrement dudit panneau photovoltaïque P. Selon un autre exemple, illustré notamment à la figure 7, le dispositif 1 support de panneau et le panneau P peuvent être d'encombrement différent.

Selon un mode de réalisation, ladite enveloppe plastique 2 peut présenter des oreilles de fixation 201, saillantes, au niveau des quatre coins de ladite enveloppe plastique 2, respectivement situées entre lesdites parois latérales 5, 6, 7, 8.

Par ailleurs, au moins deux 5, 7, notamment opposées, des parois latérales 5, 6, 7, 8 de l'enveloppe plastique 2 peuvent être de formes concaves, chaque dite paroi 5 ou 7 étant cintrée vers l'intérieur afin d'atténuer le clapot, évitant ainsi les projections d'eau sur les cellules photovoltaïques.

L'invention concerne également un système 50 support de panneaux photovoltaïques résultant de l'assemblage de dispositifs 1 supports de panneaux photovoltaïques, conformes à l'invention, et d'éléments de raccordement 30. Les éléments de raccordement 30 permettent de raccorder au moins deux dispositifs supports conformes à l'invention.

Chaque élément de raccordement est constitué essentiellement par une enveloppe plastique 31, étanche, ladite enveloppe plastique 31 dudit élément de raccordement constituant une paroi inférieure 32, une paroi supérieure 33, et quatre parois latérales 34, 35, 36, 37, ledit système présentant des moyens de fixation pour l'assemblage mutuel desdits éléments de raccordement 30 et desdits dispositifs 1 conformes à l'invention.

Ladite enveloppe plastique 31, présente un volume intérieur, apte à renfermer un volume d'air, permettant d'assurer la flottaison dudit élément de raccordement. Cette enveloppe plastique 31 peut présenter une ouverture 301 fermée par un bouchon, afin de changer les conditions de flottaison ou encore de lester le dispositif.

Cette enveloppe plastique 31 peut être fabriquée par roto moulage ou encore par les techniques d'extrusion soufflage. Par exemple, ledit système 50 présente au moins deux rangées R1, R2 de dispositifs 1 supports de panneaux photovoltaïques conformes à l'invention. Chaque rangée est constituée de dispositifs disposés, notamment côte à côte par l'intermédiaire de leurs parois latérales 5, 7.

Lesdites deux rangées R1, R2 de dispositifs 1 sont maintenues au moyen d'une rangée R3 d'éléments de raccord 30, disposés côte à côte, par l'intermédiaire de leurs parois latérales 34, 36, aptes à constituer un couloir de maintenance pour un utilisateur. La paroi supérieure 33 dudit élément de raccordement peut être non lisse, présentant, une surface notamment gaufrée, striée afin d'éviter que cette surface ne soit trop glissante lorsque piétinée.

La rangée R3 d'éléments de raccordement 30 est une rangée intercalaire permettant d'écarter entre elles les deux rangées R1, R2 de panneaux photovoltaïques évitant que le panneau d'une rangée R1 ne fasse de l'ombre sur le panneau d'une rangée R2 successive.

Selon un mode de réalisation, les moyens de fixation comprennent lesdites oreilles de fixation 201 de l'enveloppe plastique 2 des dispositifs 1 supports de panneau, ainsi que des oreilles de fixation 301 de l'enveloppe plastique 31 des éléments de raccordement 30, ainsi que des goupilles (non illustrées), chaque goupille étant destinée à traverser simultanément deux, voire trois ou quatre oreilles mises en regard afin d'assurer le verrouillage de l'assemblage.

Selon un mode de réalisation, l'élément de raccordement 31 est sensiblement de forme parallélépipède rectangle et comprend quatre oreilles de fixation à ses quatre coins 301. Le grand coté du parallélépipède est sensiblement de dimension égale à la dimension en longueur de deux 6, 8 des parois latérales de l'enveloppe 2 du dispositif.

Deux éléments de raccordement 30 consécutifs appartenant à une même rangée R3 sont côte à côte, notamment par leur petit côté, notamment fixés l'un à l'autre par la mise en regard, deux à deux, de quatre oreilles.

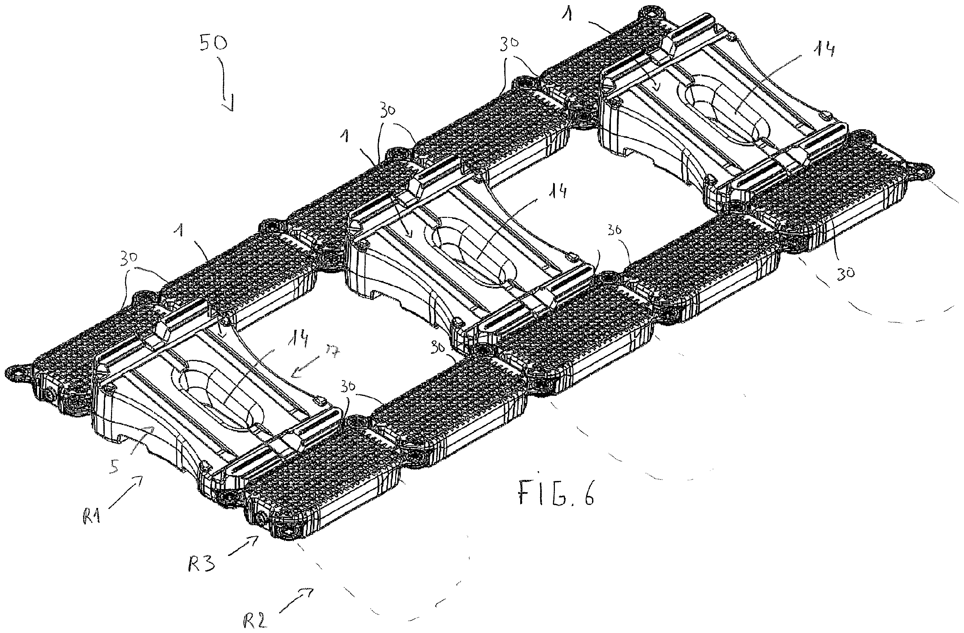

Selon un mode de réalisation illustré non limitativement à la figure 6, deux dispositifs 1 supports consécutifs appartenant à une même rangée R1 peuvent être écartés distants, mutuellement au moyen d'un élément de raccordement 30, voire deux éléments de raccordement 30 en parallèle, entretoisant les deux dispositifs 1. Aussi et dans le cas de la figure 6 et sur la rangée R3 un élément de raccordement 30 sur deux permet d'entretoiser les dispositifs 1.

Selon un autre mode de réalisation, les moyens de fixation sont constitués par des moyens de clippage mutuellement engageant entre chaque dispositif 1 support, conforme à l'invention, et chaque élément de raccordement 30. Avantageusement, lesdits moyens de clippage sont constitués par des premiers éléments plastiques 23, 24, 25, 26, 27, 28, 29, d'un seul tenant avec ladite enveloppe plastique 2 dudit dispositif 1 conforme à l'invention et des seconds éléments plastiques 38, 39, 40, 41, 42 d'un seul tenant avec ladite enveloppe plastique 31 dudit élément de raccordement 30.

Par exemple, lesdits premiers éléments plastiques 23, 24, 25, 26, 27, 28, 29, sont formés au niveau de deux parois latérales 6, 8 de l'enveloppe plastique 2 du dispositif. Lesdits seconds éléments plastiques 38, 39, 40, 41, 42 sont formés au niveau de deux parois latérales 35, 37 de l'enveloppe plastique 31 dudit élément de raccordement 30.

Lors de l'assemblage, ledit élément de raccordement 30 est disposé en recouvrement de deux dispositifs supports 1 conformes à l'invention, lesdits deux dispositifs 1, contigus, appartement à une même rangée R1. Ledit élément de raccordement est alors fixé auxdits deux dispositifs contigus par l'intermédiaire desdits moyens de fixation.

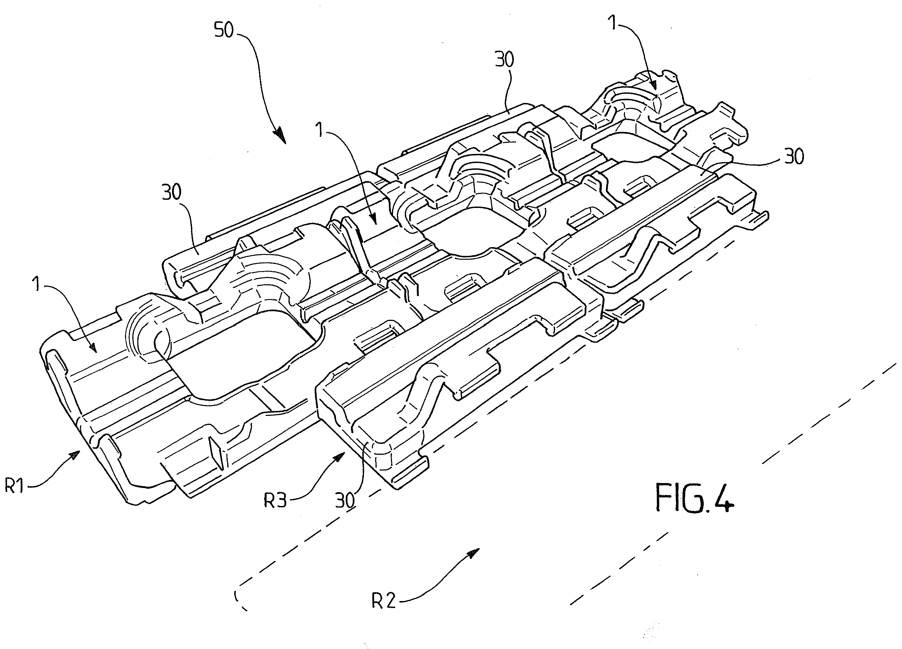

Telles qu'illustrées à la figure 4, les deux parties plastiques 41, 39, mâles, de la paroi latérale 35 dudit élément de raccordement 30 viennent s'emboîter à force dans les parties 25, 27, femelles, de la paroi latérale 6 d'un dispositif support 1 et les deux parties plastiques 38, 40, mâles, de la paroi latérale 35 dudit élément de raccordement 30 viennent s'emboîter dans les parties 26, 27 de la paroi latérale 6 du dispositif 1 contigu.

De l'autre côté dudit élément de raccordement 30, la partie 42, mâle de la paroi latérale 37 dudit élément de raccordement 30 vient s'emboîter à force dans la partie 23 femelle de la paroi latérale 8 d'un dispositif 1 d'une rangée successive et dans la partie 24 femelle de la paroi latérale 8 d'un dispositif 1 contigu sur la même rangée.

En utilisation sur l'eau, le système 50, flottant, peut être ancré au fond par tout moyen adapté, par exemple au moyen de câbles d'ancrage fixés au fond, ou encore au moyen de pieux d'ancrage.

Un tel système 50 et/ou dispositif 1 trouve également une application pour la réalisation d'installations photovoltaïques sur des terrains mouvants, tels que par exemple le terrain d'un site de décharge d'ordures, au sol, en zone inondable ou encore sur des toitures.

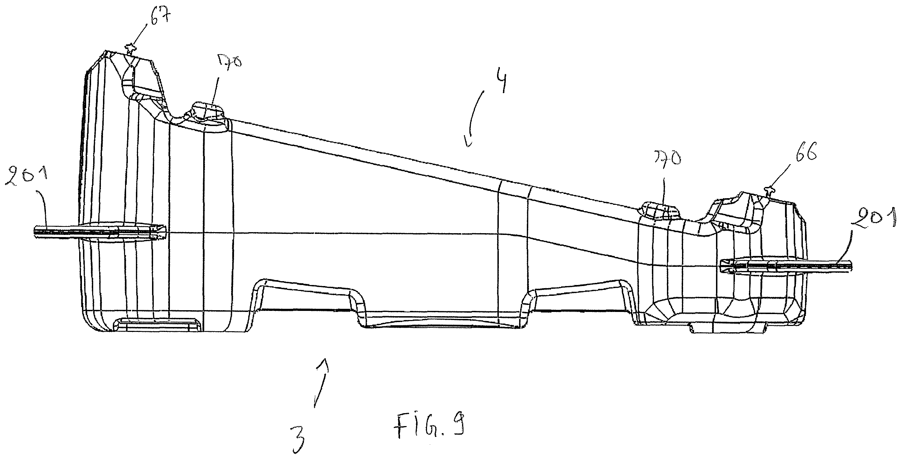

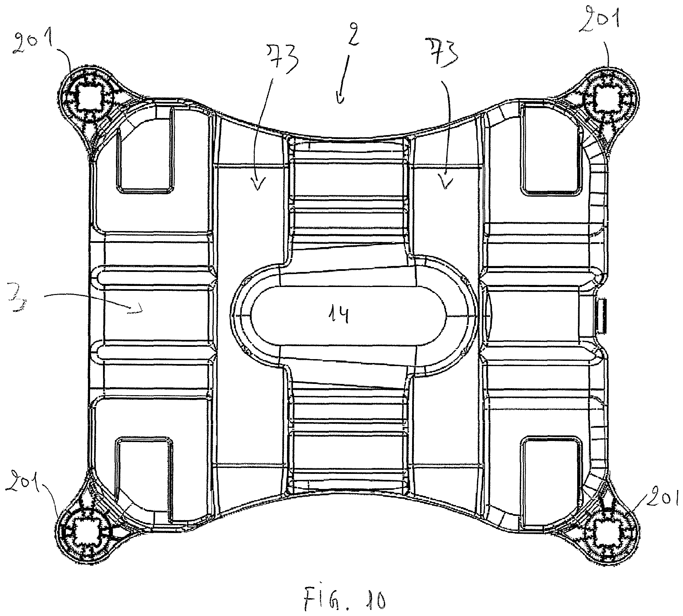

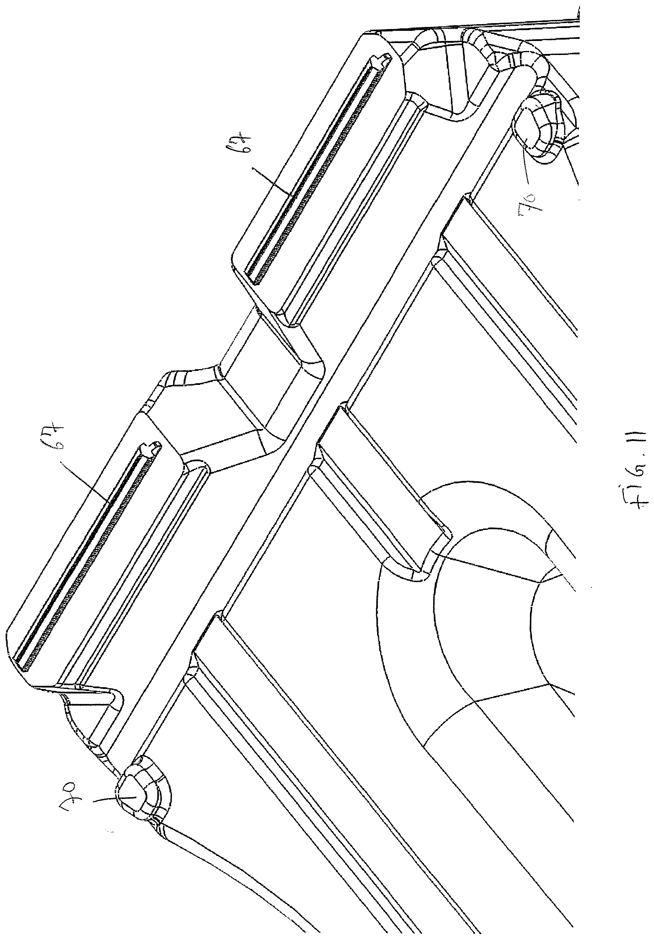

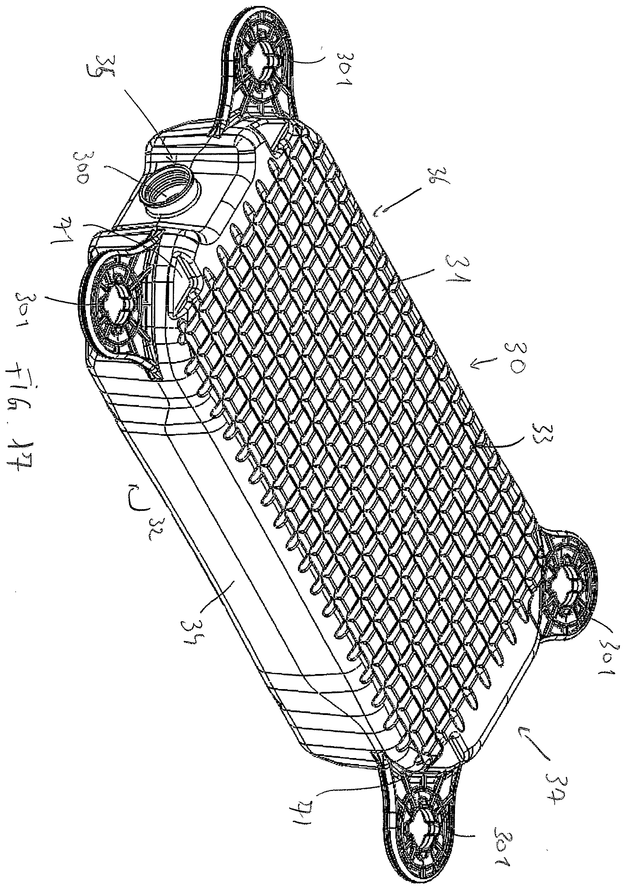

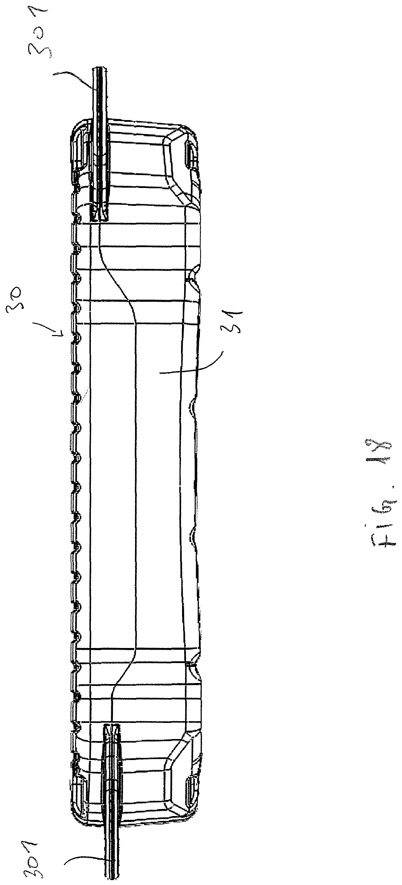

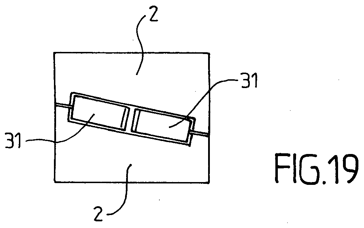

Les enveloppes plastiques 2 des dispositifs 1 et les enveloppes plastiques 31 des éléments de raccordement 30 peuvent, selon le mode de réalisation des figures 7 à 18, lors du transport, et tel qu'illustré à la figure 19 être assemblées deux par deux pour former un bloc, sensiblement parallélépipédique, aisément transportable. L'assemblage est constitué par l'emboitement de deux enveloppes plastiques 2 des dispositifs 1 et de deux enveloppes plastiques 31 des éléments de raccordement, ces dernières étant prises en sandwich entre les deux enveloppes plastiques 2. A cet effet, les deux parois dites supérieures 4 des enveloppes 2 sont tournées l'une vers l'autre. Le maintien de l'assemblage peut être facilité au moyen de plots 70 (Figure 8) sur la paroi supérieure 4 de l'enveloppe 2 des dispositifs 1 et destinés à engager avec des cavités complémentaires 71 (Figure 17) des enveloppes plastiques 31 des éléments de raccordement 30. Deux larges rainures 73, parallèles entre elles sur la paroi inférieure 3 de l'enveloppe du dispositif 1 peuvent permettre le passage des deux bras d'une fourche d'un élévateur, sous le bloc (i.e. trois palettes), voire faciliter le cerclage de l'assemblage au moyen d'un ou plusieurs liens, courant le long des rainures 73.

Naturellement, d'autres modes de réalisation auraient pu être envisagés par l'homme du métier sans pour autant sortir du cadre de l'invention définie par les revendications ci-après.

### NOMENCLATURE

1. Dispositif support de panneau,
2. Enveloppe plastique,
3. Paroi inférieure,
4. Paroi supérieure,
5.,6,7,8 Parois latérales,
10,11,12,13 Moyens glissières
140,150 Moyens de butée,
P panneau photovoltaïque,
A1,A2,A3,A4 arrêtes paroi supérieure,
14 Evidement,
15, 16 Canal en profondeur sur la paroi supérieure,
30 Elément de raccordement,
31 Enveloppe plastique,
32 Paroi inférieure,
33 Paroi supérieure,
34,35,36,37 parois latérales,
R1,R2 Rangées de dispositifs supports de panneaux,
23,25,26,27,28,29 Premiers éléments plastiques (Moyens de clippage dispositif 1),
38,39,40,41,42 Seconds éléments plastiques (Elément de raccordement 30),
50 Système support de panneaux photovoltaïques,
61,62;63 ;64 Profilés de fixation élastomères,
65 Fentes longitudinales,
66, 67 Nervures de fixation (Enveloppe plastique 2),
68 Rainure complémentaire (Profilé de fixation),
70 Plots, 71 Cavités complémentaires (Plots 70),
200 Ouverture (Enveloppe plastique 2),
201 Oreilles de fixation (Enveloppe plastique 2),
300 Ouverture (Enveloppe plastique 31),
301 Oreilles de fixation (Enveloppe plastique 31)

## Revendications

1. Installation photovoltaïque flottante comprenant des panneaux photovoltaïques et un système (50) support de panneaux photovoltaïques résultant de l'assemblage de dispositifs (1) supports de panneaux photovoltaïques et d'éléments de raccordement (30), les dispositifs (1) supports et les éléments de raccordement (30) étant des éléments modulaires, ledit système présentant des moyens de fixation pour l'assemblage entre eux desdits éléments de raccordement (30) et desdits dispositifs (1) supports de panneaux photovoltaïques et dans lequel :
- chaque dispositif (1) support de panneau photovoltaïque est constitué essentiellement d'une enveloppe plastique (2), étanche, ladite enveloppe plastique (2) constituant une paroi inférieure (3), une paroi supérieure (4), et quatre parois latérales (5, 6, 7, 8), ladite enveloppe plastique (2) étant apte à renfermer un volume d'air lui permettant de constituer un flotteur, le dispositif présentant des moyens de maintien d'un panneau photovoltaïque sur ladite paroi supérieure (4) de ladite enveloppe plastique.
- chaque élément de raccordement (30) est constitué essentiellement par une enveloppe plastique (31), étanche, ladite enveloppe plastique (31) dudit élément de raccordement constituant une paroi inférieure (32), une paroi supérieure (33), et quatre parois latérales (34, 35, 36, 37), ladite enveloppe plastique (31) présentant un volume intérieur permettant d'assurer la flottaison dudit élément de raccordement (30)
et dans lequel lesdits panneaux photovoltaïques sont maintenus sur les parois supérieures (4) des enveloppes plastiques des dispositifs (1) supports de panneau photovoltaïque
ledit système présentant au moins deux rangées (R1, R2) de dispositifs (1) supports de panneaux photovoltaïques, lesdites deux rangées (R1, R2) de dispositifs (1) étant maintenues au moyen d'une rangée (R3) d'éléments de raccordement (30), intercalaire, apte à constituer un couloir de maintenance, ladite rangée intercalaire (R3) d'éléments de raccordement (30) étant une rangée intercalaire configurée pour écarter entre elles les deux rangées (R1, R2) de dispositifs supports de panneaux photovoltaïques évitant qu'un panneau photovoltaïque appartenant à une rangée (R1) de dispositifs supports ne fasse de l'ombre sur un panneau photovoltaïque d'une rangée (R2) successive de dispositifs support
et dans lequel deux dispositifs (1) supports consécutifs appartenant à une même rangée (R1) de dispositifs supports sont écartés distants mutuellement au moyen d'un élément de raccordement (30), voire de deux éléments de raccordement (30) en parallèle, entretoisant les deux dispositifs (1), et de sorte que l'écartement entre les deux dispositifs consécutifs appartenant à une même rangée (R1) permet de prévoir les panneaux photovoltaïques débordant des enveloppes plastiques (2) des dispositifs (1) supports, ladite rangée (R1) étant constituée desdits dispositifs supports (1), disposés côte à côte par l'intermédiaire de leurs parois latérales (5,7), lesdits panneaux photovoltaïques étant prévus débordant des enveloppes plastiques (2) des dispositifs supports (1).

2. Installation selon la revendication 1, dans laquelle l'enveloppe plastique (2) de chaque dispositif (1) support de panneau photovoltaïque est obtenue par extrusion soufflage.

3. Installation selon la revendication 2, dans laquelle l'enveloppe plastique (31) de chaque élément de raccordement (30) est obtenue par extrusion soufflage

4. Installation selon l'une des revendications 1 à 3, dans laquelle ladite enveloppe plastique (2) de chaque dispositif (1) support de panneau photovoltaïque présente un évidement (14) destiné pour l'aération dudit panneau photovoltaïque, ledit évidement (14) traversant ladite enveloppe plastique (2) depuis ladite paroi supérieure (4) jusqu'à ladite paroi inférieure (3),

5. Installation selon l'une des revendications 1 à 4, dans laquelle ladite enveloppe plastique (2) dudit dispositif (1) présente une ouverture (200) fermée par un bouchon.

6. Installation selon l'une des revendications 1 à 5 dans laquelle les moyens de fixation comprennent des oreilles de fixation (201) de l'enveloppe plastique (2) des dispositifs (1) supports de panneaux photovoltaïques, ainsi que des oreilles de fixation (301) de l'enveloppe plastique (31) des éléments de raccordement (30), ainsi que des goupilles, chaque goupille étant destinée à traverser simultanément deux, voire trois oreilles mises en regard afin d'assurer le verrouillage de l'assemblage..

7. Installation selon l'une des revendications 1 à 6, dans laquelle un élément de raccordement (30) sur deux appartenant à la rangée (R3) intercalaire assure l'entretoisement desdits deux dispositifs supports consécutifs appartenant à la rangée (R1).

8. Installation selon l'une des revendications 1 à 7, dans laquelle la paroi supérieure (33) de chaque élément de raccordement (31) est non lisse, présentant, une surface gaufrée ou striée afin d'éviter que cette surface ne soit glissante lorsque piétinée.

9. Installation selon l'une des revendications 1 à 8, dans laquelle l'enveloppe plastique (31) de chacun desdits éléments de raccordement (30) présente une ouverture (300) fermée par un bouchon.

10. Installation selon la revendication 6, dans laquelle chaque élément de raccordement (31) est sensiblement de forme parallélépipède rectangle et comprend quatre oreilles de fixation (301) à ses quatre coins, le grand coté du parallélépipède étant sensiblement de dimension égale à la dimension en longueur de deux (6, 8) des parois latérales de l'enveloppe plastique (2) du dispositif support, deux éléments de raccordement (30) consécutifs appartenant à une même rangée R3 étant côte à côte, par leur petit côté, fixés l'un à l'autre par la mise en regard, deux à deux, de quatre oreilles.

## Patentansprüche

1. Schwimmende Photovoltaikanlage, umfassend Photovoltaikplatten und ein System (50) zum Tragen von Photovoltaikplatten, das durch das Zusammenfügen von Vorrichtungen (1) zum Tragen von Photovoltaikplatten und Verbindungselementen (30) entsteht, wobei die Vorrichtungen (1) zum Tragen und die Verbindungselemente (30) modulare Elemente sind, wobei das System Befestigungsmittel zum Zusammenfügen der Verbindungselemente (30) und der Vorrichtungen (1) zum Tragen von Photovoltaikplatten aufweist, und wobei:
- jede Vorrichtung (1) zum Tragen von Photovoltaikplatten im Wesentlichen aus einem dichten Kunststoffgehäuse (2) gebildet ist, wobei das Kunststoffgehäuse (2) eine untere Wand (3), eine obere Wand (4) und vier Seitenwände (5, 6, 7, 8) bildet, wobei das Kunststoffgehäuse ein Luftvolumen einschließen kann, wodurch es einen Schwimmkörper bilden kann, wobei die Vorrichtung Mittel zum Halten einer Photovoltaikplatte auf der oberen Wand (4) des Kunststoffgehäuse aufweist,
- wobei jedes Verbindungselement (30) im Wesentlichen aus einem dichten Kunststoffgehäuse (31) gebildet ist, wobei das Kunststoffgehäuse (31) des Verbindungselements eine untere Wand (32), eine obere Wand (33) und vier Seitenwände (34, 35, 36, 37) bildet, wobei das Kunststoffgehäuse (31) ein Innenvolumen aufweist, das das Aufschwimmen des Verbindungselements (30) gewährleisten kann,
und wobei die Photovoltaikplatten auf den oberen Wänden (4) der Kunststoffgehäuse der Vorrichtungen (1) zum Tragen von Photovoltaikplatten gehalten werden,
wobei das System mindestens zwei Reihen (R1, R2) von Vorrichtungen (1) zum Tragen von Photovoltaikplatten aufweist, wobei die beiden Reihen (R1, R2) von Vorrichtungen (1) mithilfe einer dazwischen liegenden Reihe (R3) von Verbindungselementen (30) gehalten werden, die einen Wartungskorridor bilden können, wobei die dazwischen liegende Reihe (R3) von Verbindungselementen (30) eine dazwischen liegende Reihe ist, die eingerichtet ist, um die beiden Reihen (R1, R2) von Vorrichtungen zum Tragen von Photovoltaikplatten voneinander zu beabstanden, wodurch verhindert wird, dass eine Photovoltaikplatte, die zu einer Reihe (R1) von Vorrichtungen zum Tragen gehört, eine Photovoltaikplatte einer anschließenden Reihe (R2) von Vorrichtungen zum Tragen beschattet,
und wobei die beiden aufeinander folgenden Vorrichtungen (1) zum Tragen, die zur gleichen Reihe (R1) von Vorrichtungen zum Tragen gehören, mithilfe eines Verbindungselements (30) oder sogar zwei parallelen Verbindungselementen (30) voneinander beabstandet sind, das/die die beiden Vorrichtungen (1) verstrebt/verstreben, und zwar so, dass es durch den Abstand zwischen den beiden aufeinander folgenden Vorrichtungen, die zur gleichen Reihe (R1) gehören, möglich ist, die Photovoltaikplatten so vorzusehen, dass sie über die Kunststoffgehäuse (2) der Vorrichtungen (1) zum Tragen hinausragen, wobei die Reihe (R1) aus den Vorrichtungen zum Tragen (1) gebildet wird, die mittels ihrer Seitenwände (5, 7) nebeneinander angeordnet sind, wobei die Photovoltaikplatten so vorgesehen sind, dass sie über die Kunststoffgehäuse (2) der Vorrichtungen zum Tragen (1) hinausragen.

2. Anlage nach Anspruch 1, wobei das Kunststoffgehäuse (2) jeder Vorrichtung (1) zum Tragen von Photovoltaikplatten durch Extrusionsblasformen erhalten wird.

3. Anlage nach Anspruch 2, wobei das Kunststoffgehäuse (31) jedes Verbindungselements (30) durch Extrusionsblasformen erhalten wird,

4. Anlage nach einem der Ansprüche 1 bis 3, wobei das Kunststoffgehäuse (2) jeder Vorrichtung (1) zum Tragen von Photovoltaikplatten eine Ausnehmung (14) aufweist, die zur Belüftung der Photovoltaikplatte vorgesehen ist, wobei die Ausnehmung (14) durch das Kunststoffgehäuse (2) von der oberen Wand (4) bis zur unteren Wand (3) verläuft.

5. Anlage nach einem der Ansprüche 1 bis 4, wobei das Kunststoffgehäuse (2) der Vorrichtung (1) eine Öffnung (200) aufweist, die durch einen Stopfen verschlossen ist.

6. Anlage nach einem der Ansprüche 1 bis 5, wobei die Befestigungsmittel Laschen zum Befestigen (201) des Kunststoffgehäuses (2) der Vorrichtungen (1) zum Tragen von Photovoltaikplatten und Laschen zum Befestigen (301) des Kunststoffgehäuses (31) der Verbindungselemente (30) sowie Stifte umfassen, wobei jeder Stift dazu bestimmt ist, gleichzeitig durch zwei oder sogar drei einander gegenüberliegende Laschen geführt zu werden, um die Arretierung der Anordnung zu gewährleisten.

7. Anlage nach einem der Ansprüche 1 bis 6, wobei jedes zweite Verbindungselement (30), das zur dazwischen liegenden Reihe (R3) gehört, die Verstrebung der beiden aufeinander folgenden Vorrichtungen zum Tragen, die zur Reihe (R1) gehören, gewährleistet.

8. Anlage nach einem der Ansprüche 1 bis 7, wobei die obere Wand (33) jedes Verbindungselements (31) nicht glatt ist und eine geprägte oder geriffelte Oberfläche aufweist, um zu verhindern, dass diese Oberfläche rutschig ist, wenn sie betreten wird.

9. Anlage nach einem der Ansprüche 1 bis 8, wobei das Kunststoffgehäuse (31) jedes der Verbindungselemente (30) eine Öffnung (300) aufweist, die mit einem Stopfen geschlossen wird.

10. Anlage nach Anspruch 6, wobei jedes Verbindungselement (31) im Wesentlichen die Form eines rechtwinkligen Parallelpipeds aufweist und an seinen vier Ecken vier Befestigungslaschen (301) umfasst, wobei die lange Seite des Parallelpipeds im Wesentlichen die gleiche Abmessung aufweist wie die Längenabmessung von zwei (6, 8) der Seitenwände des Kunststoffgehäuses (2) der Vorrichtung zum Tragen, wobei zwei aufeinander folgende Verbindungselemente (30), die zur gleichen Reihe R3 gehören, mit ihrer Schmalseite nebeneinander liegen und durch die gegenüberliegende paarweise Anordnung von vier Laschen aneinander befestigt sind.

## Claims

1. Floating photovoltaic installation comprising photovoltaic panels and a system (50) for supporting photovoltaic panels resulting from the assembly of devices (1) for supporting photovoltaic panels and of connecting elements (30), the supporting devices (1) and the connecting elements (30) being modular elements, said system having means for fastening, for assembly together, said connecting elements (30) and said devices (1) for supporting photovoltaic panels and wherein:
- each device (1) for supporting a photovoltaic panel is comprised substantially of a sealed plastic jacket (2), said plastic jacket (2) constituting a lower wall (3), an upper wall (4), and four sidewalls (5, 6, 7, 8), said plastic jacket (2) being able to enclose a volume of air allowing it to constitute a floater, with the device having means for maintaining a photovoltaic panel on said upper wall (4) of said plastic jacket
- each connecting element (30) is comprised substantially by a sealed plastic jacket (31), said plastic jacket (31) of said connecting element constituting a lower wall (32), an upper wall (33), and four sidewalls (34, 35, 36, 37), said plastic jacket (31) having an interior volume allowing the floating of said connecting element (30) to be ensured
and wherein said photovoltaic panels are maintained on the upper walls (4) of the plastic jackets of the devices (1) for supporting photovoltaic panels
said system having at least two rows (R1, R2) of devices (1) for supporting photovoltaic panels, said two rows (R1, R2) of devices (1) being maintained by means of a spacer row (R3) of connecting elements (30), able to constitute a maintenance corridor, said spacer row (R3) of connecting elements (30) being a spacer row that is configured so as to separate the two rows (R1, R2) of devices for supporting photovoltaic panels from one another, preventing a photovoltaic panel belonging to a row (R1) of supporting devices from casting a shadow on a photovoltaic panel of a successive row (R2) of supporting devices
and wherein two consecutive supporting devices (1) belonging to the same row (R1) of supporting devices are separated mutually by means of a connecting element (30), or even two connecting elements (30) in parallel, spacing the two devices (1), and such that the separation between the two consecutive devices belonging to the same row (R1) allows the photovoltaic panels to be arranged such that they overhang the plastic jackets (2) of the supporting devices (1), said row (R1) being constituted by said supporting devices (1), arranged side by side by the intermediary of their sidewalls (5, 7), said photovoltaic panels being provided such that they overhang the plastic jackets (2) of the supporting devices (1).

2. Installation according to claim 1, wherein the plastic jacket (2) of each device (1) for supporting photovoltaic panels is obtained by extrusion blow-moulding.

3. Installation according to claim 2, wherein the plastic jacket (31) of each connecting element (30) is obtained by extrusion blow-moulding.

4. Installation according to one of claims 1 to 3, wherein said plastic jacket (2) of each device (1) for supporting photovoltaic panels has a recess (14) intended for the aeration of said photovoltaic panel, said recess (14) passing through said plastic jacket (2) from said upper wall (4) to said lower wall (3).

5. Installation according to one of claims 1 to 4, wherein said plastic jacket (2) of said device (1) has an opening (200) closed by a plug.

6. Installation according to one of claims 1 to 5, wherein the fastening means comprise fastening lugs (201) for fastening the plastic jacket (2) of the devices (1) for supporting photovoltaic panels, in addition to fastening lugs (301) for fastening the plastic jacket (31) of the connecting elements (30), as well as pins, each pin being intended to simultaneously pass through two, or even three lugs set against each other in order to provide for the locking of the assembly.

7. Installation according to one of claims 1 to 6, wherein one connecting element (30) out of every two belonging to the spacer row (R3) ensures the spacing of said two consecutive supporting devices belonging to the row (R1).

8. Installation according to one of claims 1 to 7, wherein the upper wall (33) of each connecting element (31) is not smooth, having an embossed or striated surface in order to prevent this surface from being slippery when walked on.

9. Installation according to one of claims 1 to 8, wherein the plastic jacket (31) of each of said connecting elements (30) has an opening (300) closed by a plug.

10. Installation according to claim 6, wherein each connecting element (31) is substantially of rectangular parallelepiped shape and comprises four fastening lugs (301) at its four corners, the large side of the parallelepiped being substantially of dimension equal to the dimension of the length of two (6, 8) of the sidewalls of the plastic jacket (2) of the supporting device, two consecutive connecting elements (30) belonging to the same row (R3) being side by side, via their small side, fastened to one another by the setting of four lugs against one another in pairs.
